# EUROPEAN PATENT APPLICATION

(11) **EP 1 741 338 A1**
(43) Date of publication of application: **10.01.2007**
(21) Application number: 05738964.5
(22) Date of filing: 27.04.2005
(51) Int. Cl.: A01N 37/42

(54) **PLANT ROOTING INDUCER**

(30) Priority: 27.04.2004 JP 2004130744
(71) Applicant: SHISEIDO COMPANY, LTD., Tokyo 104-8010 (JP)
(72) Inventor: YOKOYAMA, Mineyuki, c/o SHISEIDO RESEARCH CENTER, Yokohama-shi, Kanagawa 224-8558 (JP); TANAKA, Osamu, Jyouyou-shi, Kyoto 610-0121 (JP); NAKAMURA, Kentaro, c/o SUMITOMO FORESTRY CO., LTD, Chiyoda-ku, Tokyo 100-8270 (JP)
(74) Representative: Henkel, Feiler & Hänzel
(86) International application number: PCT/JP2005/008460
(87) International publication number: WO 2005/102048

(57) **Abstract**

An inducing agent for plant root including a ketol unsaturated fatty acid having 5 to 24 carbon atoms, 1 to 6 double bonds between carbon atoms and an α ketol structure or γ ketol structure (in particular 9-hydroxy-10-oxo-12(Z), 15(Z)-octadecadienoic acid is preferable), which inducing agent for plant root may be used to promote or induce the root growth even when transplanting by cutting plants for which root generation is hard such as pine, cedar, tea, chestnut, may be used even for root growth of cuttings of Prunus x yedoensis (cherry trees) for which root growth is considered impossible, Hypericum chinense for which is transplantation by cutting is said to be difficult, and Paraserianthes falcataria Becker useful as a material for plywood, and may be used by a simple technique such as spraying.

## Description

### TECHNICAL FIELD

The present invention relates to an inducing agent for plant root, which promotes or induces root growth when transplanting plants by cuttings. More particularly, the present invention relates to an inducing agent for plant root having a ketol unsaturated fatty acid as an active ingredient which promotes or induces root growth when transplanting pine, cedar, tea, chestnut, or other plants for which root generation (or induction) is difficult by cuttings. The present invention further relates to an inducing agent for plant root having the ketol unsaturated fatty acid as an active ingredient which enables transplanting of Hypericum chinense or Prunus x yedoensis (cherry trees) for which transplanting by cuttings had been considered extremely difficult or impossible.

### BACKGROUND ART

Plants are ordinarily spread using seeds or cuttings. In the case of the former seeding, usually the seeds are required to be a pure line. This is because, if not using pure line seeds, the plants become diverse in form, but when seeding, there are many plants for which obtaining pure line seeds is accompanied with difficulties. Further, when seeding, there is also the separate problem that this is limited to plants from which seeds can be easily harvested.

For this reason, the above-mentioned transplanting by cuttings is also widely practiced, but when cuttings, there are also many plants for which root growth is difficult. As such plants, for example, there are pine, fir, hemlock spruce, cedar, tea, magnolia, tulip tree, hackberry, chestnut, oak, Carpinus japonica, walnut, peach, etc.

For this reason, when using cuttings of these plants, auxin-based root inducing agents such as "Rooton (active ingredient: 1-naphthylacetoamide)", "Oxiberon (active ingredient: indolebutyric acid)", are ordinarily used. However, even if using auxin-based root inducing agents, root induction of the plants is often difficult. For this reason, the amount of root inducing agents used inevitably becomes greater and can cause environmental pollution. Further, the forms of use are troublesome which makes simple mass processing difficult. That is, it is necessary to immerse the cut parts of cuttings in a high concentration auxin solution for several hours or coat the cut parts with auxin powder one at a time. Use by a simple technique is not possible.

Further, before treatment with an auxin-based chemical, pretreatment with silver nitrite, potassium permanganate, lime water, ethanol, etc. is also widely practiced. This not only makes use of a root inducing agent troublesome, but also has the problem of leading to environmental pollution. Further, even if using such troublesome processes, there are many plants, mostly trees, for which root induction is difficult. Further, trees are characterized by the ability to grow roots when saplings, but loss of their rapid root inducing ability along with their growth. Due to this property, the amount of trees which can be used for transplanting by cuttings is limited. This is a major factor making afforestation projects difficult.

The inventors worked to overcome the current problems explained above in root inducing agents and, painfully aware of the social need for their development and focusing on their future potential, engaged in researches on root inducing agents and, as a result, already developed an indole-based inducing agent, found that this has a root inducing performance, and filed a patent application relating to this inducing agent (see Japanese Patent Publication No. 10-77268A).

The indole-based root inducing agent developed by the inventors can be utilized, as a plant root inducing agent, by a simple technique such as spraying. In this respect, they eliminated the trouble in use which was the shortcoming of conventional auxin-based root inducing agents.

However, the indole-based root inducing agent is also an indole-based compound like the typical compounds of the auxin-based root inducing agents such as indoleacetic acid, indolebutyric acid, etc. The root inducing performance also could not be said to be sufficiently satisfactory.

Further, there are other auxin-based root inducing agents such as naphthaleneacetic acid etc., but the compounds exhibiting root inducing performance are limited in range. The root inducing action of aliphatic compounds, in particular substances having fatty acids as basic frameworks, are not known at all.

In view of this, the inventors found compounds having a more superior root inducing action from among this wide range of compounds and after this continued with researches on root inducing agents and novel compounds suitable for the same. At this time, the inventors hypothesized that root generation is difficult to induce in particular in trees due to the involvement of dormancy and proceeded with research focusing on its control. As a result, we found that specific ketol fatty acids (see Japanese Patent Publication No. 11-29410A) recognized to have a "flower bud formation promoting action", "growth promoting action", "dormancy suppressing action" etc. also surprisingly promote the root-induction learned that further spraying or another simple technique can be utilized, and thereby succeeded in developing the present invention.

### DISCLOSURE OF THE INVENTION

Accordingly, an object of the present invention is to provide an inducing agent for plant root having a plant root inducing action, in particular superior performance in promoting or inducing root generation when transplanting by cuttings plants for which root growth is difficult such as pine, cedar, tea, chestnut and enabling use by a simple technique such as spraying and further having as an active ingredient a compound greatly different in chemical structure from a conventional auxin-based root inducing agent compound, that is, a ketol unsaturated fatty acid.

Another object of the present invention is to provide an inducing agent for root growth effective for Hypericum chinense or Prunus x yedoensis as well having, as an active ingredient, a specific α-ketol unsaturated fatty acid among said ketol fatty acids having surprising root inducing action even for Hypericum chinense, for which root growth is considered hard, or for Prunus x yedoensis (cherry trees), for which root growth is said to be impossible.

The present invention, as explained above, provides an inducing agent for plant root. The inducing agent for plant root comprises a ketol unsaturated fatty acid having a 5 to 24 carbon atoms, 1 to 6 double bonds between carbon atoms and an α ketol structure or γ ketol structure.

In particular, as the ketol unsaturated fatty acid, 9-hydroxy-10-oxo-12(Z), 15 (Z)-octadecadienoic acid is preferable.

Note that the "Z" and "E" in the description and the claims mean the cis and trans isomers. Among these, Z indicates the cis form and E indicates the trans form. Further, the underlines show that the "Z" and "E" should originally be expressed in italics.

In the description and the claims, the singular form shall include the plural form unless it is clear from the context that it is singular.

The present invention provides an inducing agent for plant root capable of exhibiting a superior root inducing performance required when transplanting a plant by cuttings, in particular provides an inducing agent for plant root capable of opening the way for transplanting by cuttings of plants such as pine, cedar, tea, chestnut for which root growth is difficult and containing, as an active ingredient, a ketol unsaturated fatty acid capable of providing a superior root growth promoting performance or inducing performance.

Further, the present invention opened the way for transplanting by cuttings of Hypericum chinense (scientific name Hypericum chinense var. salicifolla) for which root growth is considered hard and Prunus x yedoensis (cherry trees) (scientific name Prunus yedoensis Matsumura) for which root growth is said to be impossible. Further, it also enables transplanting by cutting of Paraserianthes falcataria (scientific name Paraserianthes falcataria Becker) useful as materials for plywood due to its fast growth and straight trunks.

Further, the plant root inducing agent of the present invention has the advantages that it does not require use by the techniques of immersing the cut parts of cuttings in a high concentration auxin solution for several hours or coating the cut parts with an auxin powder one by one, like with a conventional auxin-based root inducing agents and that it can be used by a simple technique such as spraying, dripping, or coating as a liquid agent or an emulsion.

The active ingredient compound of the root inducing agent of the present invention is an inducing agent having a simple ketol structure which has a naturally present unsaturated fatty acid as a basic framework to which two oxygen atoms and one hydroden atom are attached and can express a predetermined performance in a low concentration, and therefore, enables decrease of the possibility of environmental pollution by a conventional auxin-based root inducing agent.

Further, the active ingredient, ketol unsaturated fatty acid is an aliphatic compound having, as a basic skeleton, an unsaturated fatty acid different in basic skeleton, that is, very different in chemical structure, from the typical active ingredients of conventional auxin-based root inducing agents, that is, indole-based compounds or naphthaleneacetic acid or other aromatic compound. Finding a plant root inducing action in such a substance was completely unexpected.

Therefore, the present invention opened up a new area in plant root inducing agents in the following points and provides outstanding technology.

### BRIEF DESCRIPTION OF THE DRAWINGS

A view showing the results of a root inducing performance test for Hypericum chinense in Example 3.

### BEST MODE FOR WORKING THE INVENTION

The embodiment of the present invention including the best mode for working the present invention will now be explained in detail.

The active ingredient of the plant root inducing agent of the present invention, that is, a ketol unsaturated fatty acid, as explained above, is a C₅ to C₂₄ ketol fatty acid having 1 to 6 double bonds between carbon atoms and having an α ketol structure or γ ketol structure.

The ketol unsaturated fatty acid having an α ketol structure or γ structure ketol structure is an unsaturated fatty acid having the carbon atom forming the carbonyl group and the carbon atom bonded with the hydroxy group at the α-position or γ-position.

The ketol unsaturated fatty acids can also be expressed by general formulas. Shown by this, the former ketol unsaturated fatty acid having an α ketol structure is expressed by the following general formulas (I) and (II), while the latter ketol unsaturated fatty acid having a γ ketol structure is expressed by the following general formulas (III) and (IV).

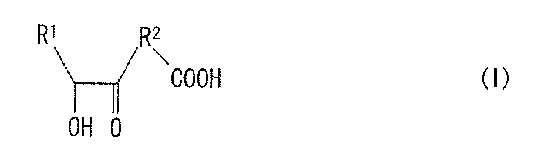

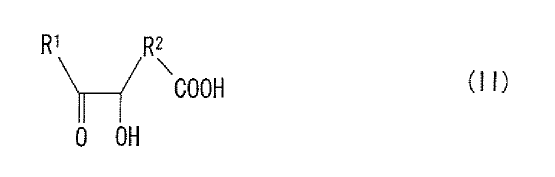

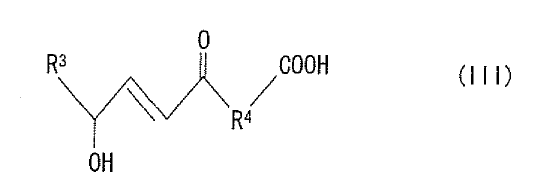

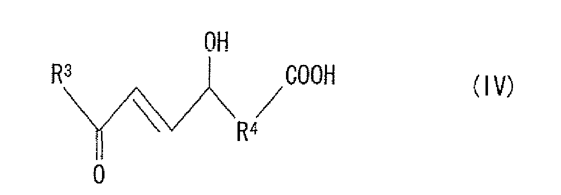

Regarding the ketol unsaturated fatty acid having an α ketol structure, in the general formulas (I) and (II), R¹ indicates a straight chain alkyl group or straight chain unsaturated hydrocarbon group having a double bond, R² indicates a straight chain alkylene or straight chain unsaturated hydrocarbon chain having a double bond, at least one of R¹ and R² has one double bond, there are a total of 5 to 24 carbon atoms in the ketol unsaturated fatty acid, and there are 1 to 6 double bonds between the carbon atoms must be selected.

Further, regarding the ketol unsaturated fatty acid having a γ ketol structure, in the general formulas (III) and (IV), R³ indicates a straight chain alkyl group or straight chain unsaturated hydrocarbon group having a double bond, R⁴ indicates a straight chain alkylene or straight chain unsaturated hydrocarbon chain having a double bond, there are a total of 7 to 24 carbon atoms in the ketol unsaturated fatty acid, and there are 1 to 6 double bonds between the carbon atoms must be selected.

Regarding said unsaturated ketol fatty acid, a C₁₈ compound having two double bonds between carbon atoms is preferable as the compound for the active ingredient of the root inducing agent of the present invention. As specific examples of the preferable ketol fatty acid, 9-hydroxy-10-oxo-12(Z),15(Z)-octadecadienoic acid corresponding to the general formula (I) (below, also referred to as the "specific ketol fatty acid (Ia)"), 13-hydroxy-12-oxo-9(Z),15(Z)-octadecadienoic acid corresponding to the general formula (II) (below, also referred to as the "specific ketol fatty acid (IIa)"), 13-hydroxy-10-oxo-11(E),15(Z)-octadecadienoic acid corresponding to the general formula (III) (hereinafter also referred to as the "specific ketol fatty acid (IIIa)"), 9-hydroxy-12-oxo-10(E),15(Z)-octadecadienoic acid corresponding to the general formula (IV) (hereinafter also referred to as the "specific ketol fatty acid (IVa)") etc. may be mentioned.

The chemical structural formulas of the specific ketol fatty acids (Ia) to (IVa) will now be described.

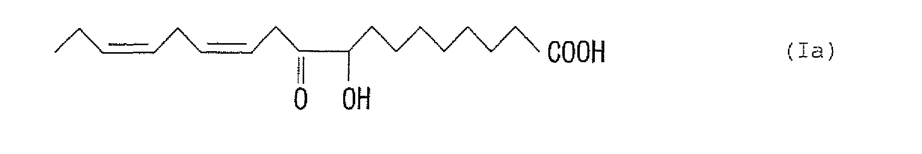

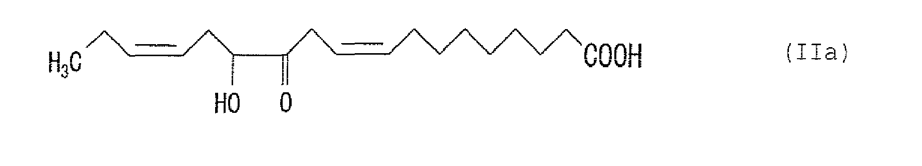

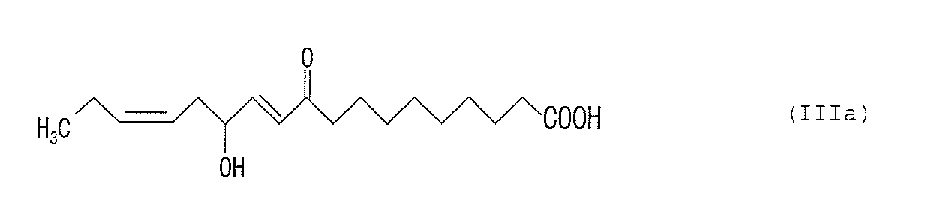

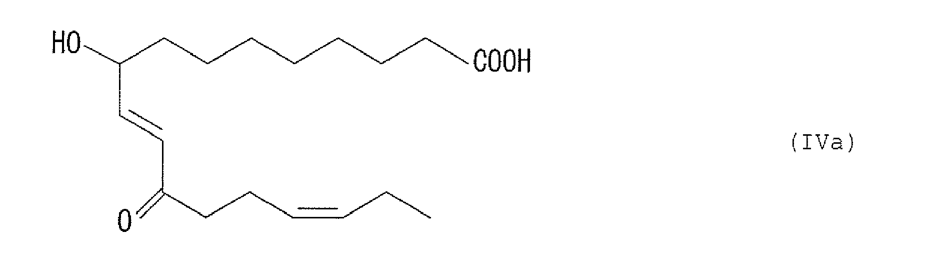

### 1. Regarding the production method of Active ingredient compound of the present plant root inducing agent

The production method of the active ingredient of the plant root inducing agent of the present invention, that is, the ketol unsaturated fatty acid having an α or γ ketol structure, will now be explained in detail with reference to the example of a specific ketol fatty acid (Ia) to (IVa).

The specific ketol fatty acid may be produced by a method corresponding to the specific structure of the desired ketol fatty acid. These are as follows:
(1) A specific ketol fatty acid in a form clearly included in a natural substance may be produced by extraction and purification from this natural substance (hereinafter referred to as the "extraction method").
(2) A specific ketol fatty acid may be obtained by causing lipoxygenase or another enzyme to act on an unsaturated fatty acid according to the fatty acid metabolic route in plants (hereinafter referred to as the "enzyme method").
(3) A specific ketol fatty acid may be obtained by using a known ordinary chemical synthesis method according to the specific structure of the desired specific ketol fatty acid (hereinafter referred to as the "chemical synthesis method").

These production methods will be specifically explained below.

### (1) Regarding extraction method:

The specific ketol fatty acid (Ia) can be extracted and purified from one type of Lemnaceae, that is, duckweed (Lemna paucicostata).

The raw material in this extraction method, duckweed, is a small sized water plant floating on the surface of a pond or paddyfield with a blade-like structure on the surface laying down a single root in the water. It is known that the comparative proliferation speed is fast. Flowers are formed on the body side of the leafy member. Two male flowers comprising just a single stamen and a female flower comprising one pistil are wrapped in a common small bract. The crushed product of this duckweed was centrifuged (8000 x g, 10 minutes). The fraction of the obtained supernatent and precipitate after removal of the supernatent can be utilized as the fraction including the specific ketol fatty acid (Ia). In this way, the specific ketol fatty acid (Ia) can be isolated and purified from the crushed material as a starting material.

Further, as a preferable starting material, an aqueous solution in which the specific ketol fatty acid (Ia) has eluted by the floating or immersion of duckweed can be mentioned. By using this, an eluate having a high concentration of a specific ketol fatty acid (Ia) can be obtained and the specific ketol fatty acid (Ia) can be efficiently prepared. At this time, as explained later, by using a material given a stress such as drying stress or a higher concentration eluate can be obtained, so this is preferable. Specific examples of preparation of this aqueous solution are described in the examples explained later. The immersion time may be 2 to 3 hours or so at room temperature, but should not be particularly limited.

When preparing a starting material of the specific ketol fatty acid (Ia) by this method, by giving a specific stress in advance, it is possible to induce the greater production of the specific ketol fatty acid (Ia) in duckweed. This is preferable in terms of the production efficiency of the specific ketol fatty acid (Ia). Specifically, drought stress, heat stress, hypertonic stress etc. may be mentioned as said specific stress.

Drought stress may be given by allowing duckweed to stand at, for example, a low humidity (preferably relative humidity of 50% or less) at room temperature, preferably 24 to 25°C or so, in a state spread over dried filter paper. The drying time in this case, while depending also on the density of the duckweed laid out to be dried, is generally at least 20 seconds, preferably 5 minutes to 5 hours.

Heat stress can be given, for example, by immersion of duckweed in warm water. The temperature of the warm water in this case should be selected according to the immersion time. For example, when immersing for 5 minutes or so, 40 to 65°C is possible, preferably 45 to 60°C, more preferably 50 to 55°C. After this heat stress treatment, the duckweed is preferably quickly returned to ordinary temperature water.

Hypertonic stress may be given by bringing the duckweed into contact with, for example, high osmotic pressure solution such as a high concentration sugar solution. The sugar concentration in this case, in, for example, the case of a mannitol solution, is 0.3M or more, preferably 0.5 to 0.7M. The processing time is 1 minute or more, preferably 2 to 5 minutes, when, for example, using a 0.5M mannitol solution.

In this way, it is thus possible to efficiently prepare a starting material including the desired specific ketol fatty acid (Ia).

Note that the type of the strain of the duckweed forming the basis of the various starting materials is not particularly limited, but the P 441 strain is a particularly preferable strain in the production of the specific ketol fatty acid (Ia).

The starting material thus prepared may be isolated and purified by the following means to produce the desired specific ketol fatty acid (Ia). Note that the separating means referred to here is an illustration. The separating means for producing the specific ketol fatty acid (Ia) from the above starting material is not limited to the illustrated means. Various types of means may be used without particular restriction.

The above prepared starting material is preferably first solvent extracted to extract the ingredient containing the specific ketol fatty acid (Ia). The solvent used for this solvent extraction is not particularly limited. For example, chloroform, ethyl acetate, ether etc. may be used. Among these solvents, chloroform is preferable in the point that impurities can be relatively easily removed.

The hydrophobic layer fraction obtained by this solvent extraction can be washed and concentrated using known ordinary methods and subjected to high performance liquid chromatograph (HPLC) using an ODS (octadecylsilane) column or other reversed phase column chromatography column to identify and isolate flower bud formation inducing activity fraction, that is, specific ketol fatty acid (Ia). Note that the fact that a specific ketol fatty acid exhibits a flower bud formation inducing activity is already known (see Japanese Patent Publication No. 10-324602A).

A known other ordinary separating means, for example ultrafiltration, gel filtration chromatography etc. may also be combined for use, of course, according to the properties of the starting material. Above, a process for producing a specific ketol fatty acid (Ia) by the extraction method was explained, but when the desired form of the specific ketol fatty acid is present in a plant other than duckweed, it becomes possible to use a method based on the above or a variant of that method to produce this specific ketol fatty acid.

### (2) Regarding enzyme method:

As a typical starting material in the enzyme method, various types of unsaturated fatty acids having double bonds at positions according to the structure of the desired specific ketol fatty acid and having 5 to 24 carbon atoms may be mentioned. As these unsaturated fatty acids, for example, oleic acid, vaccenic acid, linolic acid, α-linolenic acid, γ-linolenic acid, arachidonic acid, 9,11-octadecadienoic acid, 10,12-octadecadienoic acid, 9,12,15-octadecatrienoic acid, 6,9,12,15-octadecatetraenoic acid, 11,14-eicosadienoic acid, 5,8,11-eicosatrienoic acid, 11,14,17-eicosatrienoic acid, 5,8,11,19,17-eicosapentaenoic acid, 13,16-docosadienoic acid, 13,16,19-docosatrienoic acid, 7,10,13,16-docosatetraenoic acid, 7,10,13,16,19-docosapentaenoic acid, 4,7,10,13,16,19-docosahexaenoic acid etc. may be mentioned, but the invention is by no means limited to these unsaturated fatty acids.

These unsaturated fatty acids are unsaturated fatty acids generally included in animals, plants etc. Fatty acids extracted and purified from these animals, plants etc. through known ordinary methods or ones chemically synthesized by known ordinary methods may be used or commercially available ones may be used of course. In this enzyme method, said unsaturated fatty acids are used, as a substrate, and acted on by lipoxygenase (LOX) to introduce hydroperoxy groups (-OOH) into the carbon chain of these unsaturated fatty acids.

The lipoxygenase is an oxidation reduction enzyme introducing molecular oxygen as hydroperoxy groups into the carbon chains of the unsaturated fatty acids. Its presence is confirmed in both plants and animals. Its presence is also confirmed in yeast such as Saccharomyces.

For example, in the case of plants, its presence is confirmed in all angiosperms (specifically, all dicots and monocots to which the later mentioned plant root inducing agent of the present invention can be applied).

Among these plants, in particular soybeans, flax, alfalfa, barley, broad beans, sweet white lupine, lentils, green beans, potatoes, wheat, apples, bread yeast, cotton, cucumbers, gooseberries, grapes, pears, common beans, rice, strawberries, sunflower, tea etc. are preferable as the source of the lipoxygenase. Further, chlorophyll tends strongly to inhibit the above activity of lipoxygenase, so as much as possible seeds, roots, fruit etc. of plants not containing chlorophyll are preferably selected as the material for the lipoxygenase.

In the present invention, the lipoxygenase is not particularly limited in source so long as it can introduce hydroperoxy groups at desired positions of the carbon chain of the unsaturated fatty acid, but in the case of the specific ketol fatty acid (Ia), as much as possible, it is preferable to use lipoxygenase selectively oxidizing the double bond part at the 9-position of linolic acid or linolenic acid. As a typical selective lipoxygenase, for example, lipoxygenase derived from rice germ may be mentioned (Yamamoto, A., Fuji, Y., Yasumoto, K., Mitsuda, H., Agric. Biol. Chem., 44, 443 (1980) etc.)

As the selective unsaturated fatty acid used as a substrate for said selective lipoxygenase, linolic acid or α-linolenic acid is preferably used. Note that, when using an unsaturated fatty acid as a substrate for treatment by lipoxygenase, it is naturally preferable to advance the enzyme reaction at the best temperature and best pH of the lipoxygenase used. Further, foreign matter not intended to be produced, formed by the above lipoxygenase reaction process, can be easily separated by a known ordinary method, for example, the HPLC etc. described in the above section (1).

Said lipoxygenase may be one extracted and purified from the above plants etc. by a known ordinary method or a commercially available method. It is possible to produce a hydroperoxy unsaturated fatty acid from the above unsaturated fatty acid in this way. This hydroperoxy unsaturated fatty acid can be positioned, as an intermediate, in the production process of the specific ketol fatty acid by the enzyme method.

As the hydroperoxy unsaturated fatty acid, for example, 9-hydroperoxy-10 (E), 12 (Z), 15 (Z) -octadecatrienoic acid capable of being obtained by the action of lipoxygenase on α-linolenic acid may be mentioned, as an intermediate of the specific ketol fatty acid (Ia), while 13-hydroperoxy-9(Z), 11 (E), 15 (Z)-octadecatrienoic acid may be mentioned, as an intermediate of the specific ketol fatty acid (IIIa).

The chemical structural formulae of these hydroperoxy fatty acids will be explained below as the former 9-hydroperoxy-10(E), 12(Z), 15(Z)-octadecatrienoic acid as the hydroperoxy fatty acid (Ia') relating to the present invention and as the latter 13-hydroperoxy-9(Z), 11(E), 15(Z)-octadecatrienoic acid as the hydroperoxy fatty acid (IIIa') relating to the present invention:

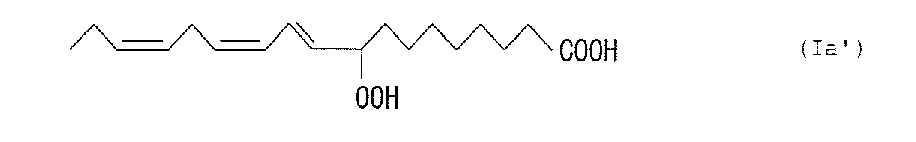

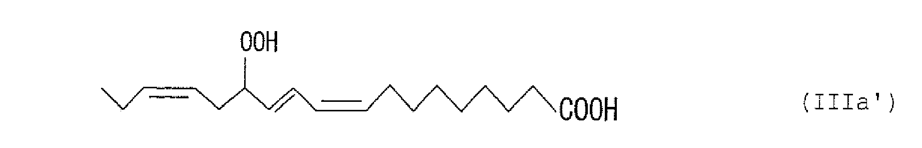

The specific ketol fatty acid can be produced using hydroperoxy unsaturated fatty acid, as a substrate, by the action of allenoxide synthase. This allenoxide synthase is an enzyme having activity for converting a hydroperoxy group to a ketol form through epoxidation. Like the above lipoxygenase, it is an enzyme present in plants, animals, and yeast. In the case of plants, it is an enzyme present in angiosperms, as a whole (specifically, all dicots and monocots to which the later explained plant root inducing agent of the present invention can be applied). Note that the presence of this allenoxide synthase is observed in plants such as barley, wheat, corn, cotton, eggplant, flax (seeds etc.), lettuce, oats, spinach, sunflower etc.

In the present invention, the allenoxide synthase used for producing the specific ketol fatty acid is not particularly limited so long as, for example, it can dehydrate the hydroperoxy group of the 9-position of the 9-hydroperoxy-10(E),12(Z),15(Z)-octadecatrienoic acid to form an epoxy group and can give, as a result, the desired specific ketol fatty acid by an OH⁻ nucleating reaction. The allenoxide synthase used here can be one extracted and purified by a known ordinary method from the plants etc. or a commercially available one. Note that the two steps of the enzyme reaction may be performed separately or performed continuously.

When performing treatment using the allenoxide synthase, naturally proceeding with the enzyme reaction at the most preferable temperature and most preferable pH of the allenoxide synthase used is preferable. Further, the enzyme used may be a crude product or a purified product. By using the crude or purified product to proceed with the enzyme reaction, the desired specific ketol fatty acid can be obtained. Further, by immobilizing said enzyme on a carrier, preparing the immobilized enzymes, and performing column processing or batch processing etc. on the substrate, it is possible to obtain the desired specific ketol fatty acid.

Further, as the method for preparation of the enzymes used in said two steps, genetic engineering techniques may be used. That is, it is possible to extract and obtain the genes for coding these enzymes from plants etc. by ordinary methods or to obtain the enzymes by chemical synthesis based on the gene sequences of the enzymes and use these genes for transformation of microorganisms such as E. Coli, yeast, animal cultured cells, plant cultured cells etc., and express the recombinant enzyme proteins in these transformed cells to obtain the desired enzymes.

When using an OH⁻ nucleating reaction (explained above) after forming the epoxy groups to obtain the specific ketol fatty acid, depending upon the form of action near the epoxy groups of the nucleated material, a γ-ketol compound is produced, in addition to the α-ketol unsaturated fatty acid.

This γ-ketol compound can be easily separated from α-ketol compound by using a known ordinary separating means such as HPLC explained in the above section (1).

### (3) Regarding chemical synthesis method:

The specific ketol fatty acid can be produced by using a known ordinary chemical synthesis method. For example, a saturated carbon chain having a reactive group such as an aldehyde group at one end and having a carboxyl terminal bonded with a protective group attached to its other end is synthesized by a known ordinary method and, separately, an unsaturated alcohol such as cis-3-hexen-1-ol is used, as a starting material, to synthesize an unsaturated carbon chain having a reactive terminal having an unsaturated group at a desired position. Next, the saturated hydrocarbon chain and the unsaturated carbon chain are reacted to produce a specific ketol fatty acid. Note that, in this series of reactions, a protective group added to a terminal not intended for reaction or a catalyst for promoting a reaction may be suitably selected according to the specific reaction format.

Specifically, for example, it is possible to synthesize a specific ketol fatty acid by the following procedure.

### i) Synthesis of specific ketol fatty acid (Ia)

Nonanedioic acid monoethyl ester is used, as a starting material, and reacted with N,N'-carbonyldiimidazole to obtain an acid imidazolide, then is reduced at a low temperature with LiAlH₄ to synthesize the corresponding aldehyde. Note that said starting material may also be made, for example, a 1,9-nonanediol or other diol to synthesize a similar aldehyde.

Separate from this, cis-3-hexen-1-ol(cis-3-hexen-1-ol) may reacted with triphenylphosphine and carbon tetrabromide, the brominated compound obtained was reacted with triphenyl phosphine, the resultant mixture was reacted, in the presence of n-BuLi, with chloroacetaldehyde to form cis olefin, which was then reacted with methylthiomethyl p-tolyl sulfone, then reacted, in the presence of NaH, with the above aldehyde, the induced secondary alcohol protected with tert-butyl diphenyl silyl chloride (TBDPSCl), acid hydrolyzed, then the protection removed to synthesize the desired specific ketol fatty acid (Ia).

This synthesis process of the specific ketol fatty acid (Ia) will now be shown by a simple process diagram.

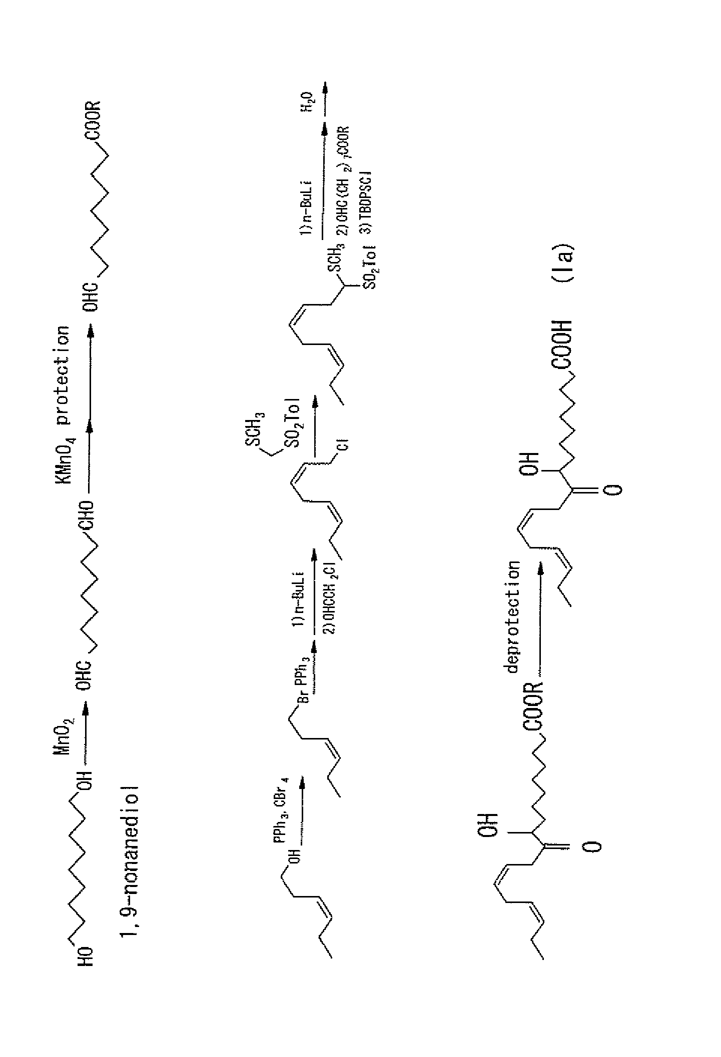

### ii) Synthesis of specific ketol fatty acid (IIa)

Nonanedioic acid monoethyl ester is used, as a starting material, and reacted with thionyl chloride to obtain an acid chloride, which is then is reduced with NaBH₄ to form an acid alcohol. Next, the free carboxylic acid of this acid alcohol is protected, and then reacted with triphenylphosphine and carbon tetrabromide. The brominated compound thus obtained is reacted with triphenylphosphine and further reacted with chloroacetaldehyde in the presence of n-BuLi to form a cis olefin. Further, this is reacted with methylthiomethyl p-tolyl sulfone.

This reaction product may be separately reacted with an aldehyde derived by PCC oxidation of cis-3-hexen-1-ol in the presence of n-BuLi and finally the protection removed so as to synthesize the desired specific ketol fatty acid (IIa). A simple process diagram of an example of the process of synthesis of this specific ketol fatty acid (IIa) will be shown below.

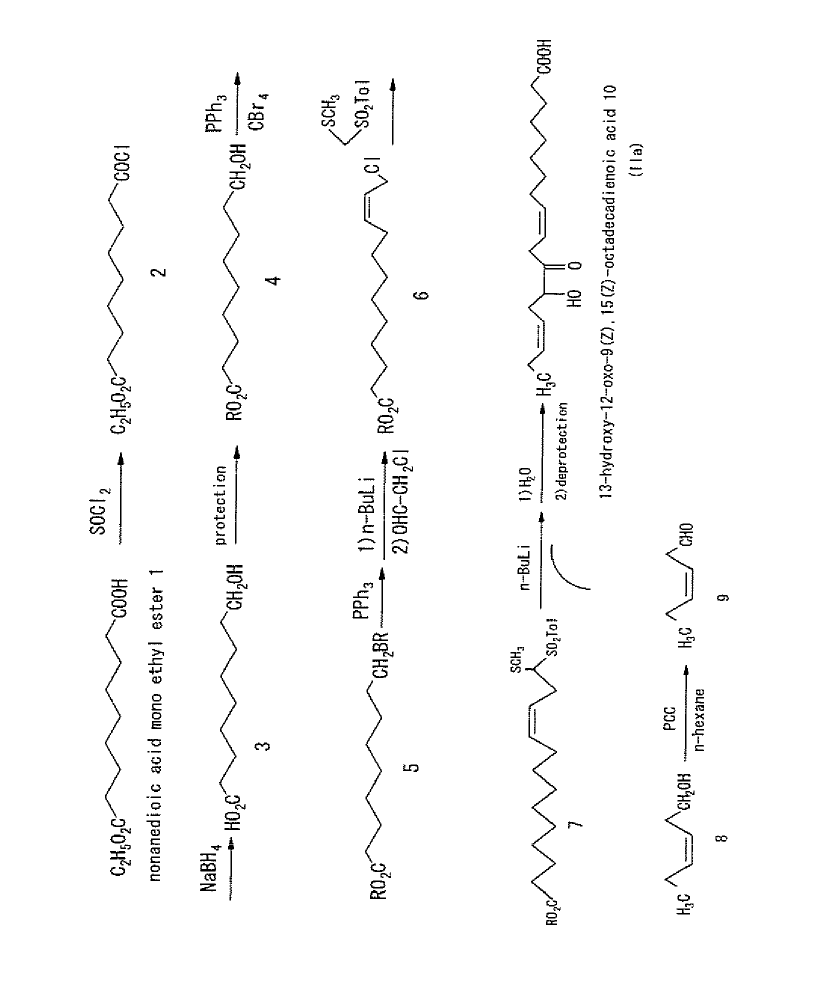

### iii) Synthesis of ketol fatty acid (IIIa) of present invention

Methyl vinyl ketone is used, as a starting material, and reacted with trimethylsilylchloride in the presence of LDA and DME and the sillyl ether obtained is reacted at a low temperature (-70°C) with the addition of MCPBA and trimethylamine hydrofluoric acid to prepare a ketoalcohol. Thereafter, the carbonyl group of the ketoalcohol is protected, then triphenylphosphine and trichloroacetone are reacted, using a reaction reagent, without the addition of a chloride to the olefin.

Next, the reaction product is reacted with formic acid in the presence of tributylarsine and K₂CO₃ to form a trans olefin and obtain a chloride. Thereafter, this chloride may be reacted with an aldehyde derived by PCC oxidation of cis-3-hexen-l-ol for a bonding reaction between this reaction product and 6-heptenonic acid and finally the protection removed to synthesize the desired specific ketol fatty acid (IIIa).

This process of synthesis of the specific ketol fatty acid (IIIa) will be shown by a simple process diagram below.

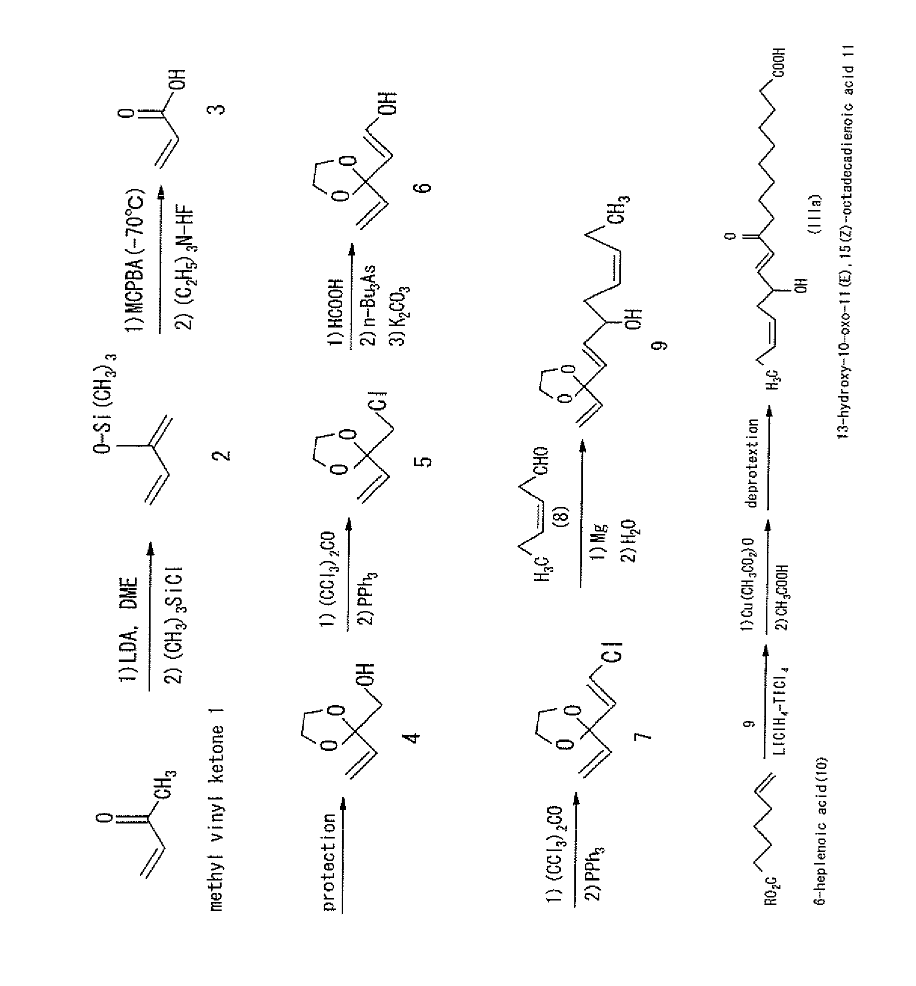

### 2. Regarding plant root inducing agent of present invention

The active ingredient of the plant root inducing agent of the present invention, as explained above, is a ketol unsaturated fatty acid comprised of a C₅ to C₂₄ ketol fatty acid with 1 to 6 double bonds between carbon atoms and with an α ketol structure or γ ketol structure.

The ketol unsaturated fatty acid having an α ketol structure has 5 to 24 carbon atoms, has 1 to 6 double bonds between carbon atoms, and can be expressed by the general formula (I) or (II). Further, the ketol unsaturated fatty acid having a γ ketol structure has 7 to 24 carbon atoms, has 1 to 6 double bonds between carbon atoms, and can be expressed by the general formula (III) or (IV) . Note that the R₁, R₂, R₃, and R₄ in these general formulae were as explained above.

The plant root inducing agent of the present invention can be used for plants by an simple technique such as spraying to promote or induce root generation of that plant.

As the mode of use, the active ingredient compound or a preparation containing the same may be used on plants as an aqueous solution by a simple technique such as spraying, coating, immersion. In particular, when used for root inducing of a cutting of Prunus x yedoensis, Hypericum chinense, or Paraserianthes falcataria Becker, it is sufficient to coat or spray a solution containing a specific ketol fatty acid (Ia) on the cuttings or immerse the cuttings in said solution.

The upper limit of the administration of said specific ketol fatty acid to a plant is not particularly limited. That is, according to the plant root inducing agent of the present invention, even if administering a large amount of the specific ketol fatty acid, almost no negative effect against the plants such as growth inhibition can be recognized at all. If overly administering a conventionally used plant hormone such as auxin or cytokinin, a negative effect appeared on the plant. At the time of use of these, it was therefore necessary to pay special attention not to overly administer them. Compared with this, the plant root inducing agent of the present invention can be said to be extremely superior.

Further, the lower limit concentration of administration to a plant with the specific ketol fatty acid differs depending upon the type or size of the plant specimen, but the rule is 1 µM or more per administration to one plant specimen.

The amount of specific ketol fatty acid formulated in the plant root inducing agent of the present invention may be selected according to the mode of use or the type of the plant to be used for and further by the specific form of the plant root inducing agent of the present invention.

As the form of the plant root inducing agent of the present invention, the active ingredient specific ketol fatty acid may also be used as it is, but the active ingredient may further be formulated with a basic agent or other additives to form a composition. The concentration of the active ingredient formulated is not particularly limited, but if considering the general rule for administration of the specific ketol fatty acid, generally 0.1 to 100 ppm or so, based upon the total weight of the agent (composition) is preferable, more preferably 1 to 50 ppm or so.

As the form of agent of the plant root inducing agent (composition) of the present invention, for example, a liquid agent, solid agent, powder agent, emulsion agent, bed additive or other form may be mentioned. According to that form, a pharmacologically acceptable known carrier ingredient, pharmacological aid etc. may be suitably added to such an extent not detracting from the anticipated effect of the present invention, that is, the plant root inducing action. For example, as the carrier ingredient, when the plant root inducing agent of the present invention is a bed additive or solid agent, generally talc, clay, vermiculite, diatomaceous earth, kaolin, calcium carbonate, calcium hydroxide, white clay, silica gel, or other inorganic substances or flour, starch or other solid carriers may be used, while, when a liquid, generally water, aromatic hydrocarbons such as xylene, ethanol, alcohols such as ethylene glycol, ketones such as acetone, dioxane, ethers such as tetrahydrofuran, dimethylformamide, dimethylsulfoxide, acetonitrile and other liquid carriers may be used, as the carrier ingredient.

Further, as the pharmacological aids, for example anionic surfactants such as alkyl sulfuric acid esters, alkyl sulfonate, alkylaryl sulfonates, dialkyl sulfosuccinates cationic surfactants such as higher aliphatic amine salts nonionic surfactants such as polyoxyethylene glycol alkyl ethers, polyoxyethylene glycol acyl esters, polyoxyethylene glycol polyhydric alcohol acyl esters, cellulose derivatives thickeners such as gelatin, casein, gum Arabic, extenders, binders etc. may be suitably incorporated. Further, if necessary, general plant growth regulators, benzoic acid, nicotinic acid, nicotinic acid amides, pipecolic acid etc. may be formulated into the plant root inducing agent of the present invention to such an extent not detracting from the anticipated effects of the present invention.

The plant root inducing agent of the present invention can be used for various plants by a method according to its form. The most characterizing feature is that it can be sprayed, dripped, coated, etc. as a liquid or emulsion not only at the growth points of the plants, but also at all or part of the plants including their stems and leaves. This point is greatly different from the conventional auxin-based root inducing agent.

An auxin-based root inducing agent requires that the cut part of the cutting to be immersed in a high concentration auxin solution for several hours before insertion into the soil or requires a powder of auxin be applied to the cut parts one at a time. This made mass processing difficult.

The plant root inducing agent of the present invention may be sprayed by a sprayer etc. after the required number of cuttings have been inserted into the soil. For this reason, the above difficulty can be avoided. This makes the present root inducing agent suitable for mass processing.

As a sprayable root inducing agent suitable for mass processing, there is probably only the indole lactone having the above specific structure developed by the inventors (see Japanese Patent Publication No. 10-77268A). This specific indole lactone is weak in effect with respect to dormant plants in the same way as the various types of auxin and is limited in places of use. The plant root inducing agent of the present invention has, as its major feature, the ability to induce root generation even in dormant plants.

The frequency of administration of the plant root inducing agent of the present invention to plants differs depending upon the type of the plant specimen, purpose of administration etc., but basically can give the desired effect even by a single administration. Even in the case of multiple administration, a week or more interval between administrations is effective.

The types of plants to which the plant root inducing agent of the present invention can be applied are not particularly limited, but the agent is effective not only for angiosperms (dicots and monocots), but also fungi, lichen, mosses, ferns, and gymnosperms.

Among the angiosperms, as dicots, there are, for example, Pharbitis (Pharbitis nil), Calystegia (Calystegia japonica, Calystegia hederacea, Calystegia soldanella), Ipomoea (Ipomoea pes-caprae, Ipomoea batatas), Cuscuta (Cuscuta japonica Choisy, Cuscuta australis R. Br.) included in the Convolvulaceae, Dianthus, Stellaria, Minuartia, Cerastium, Sagina, Arenaria, Moehringia, Pseudostellaria, Honkenya, Spergula, Spergularia, Silene, Lychnis, Melandryum, Cucubalus, and other Caryophyllaceae, Casuarinaceae, Saururaceae, Piperaceae, Sarcandra glabra, Salicaceae, Myricaceae, Juglandaceae, Betulaceae, Fagaceae, Ulmaceae, Moraceae, Urticaceae, Podostemaceae, Proteaceae, Olacaceae, Santalaceae, and Viscaceae.

Further, as dicots, there may be illustrated Aristolochiaceae, Rafflesiaceae, Balanophoraceae, Polygonaceae, Chenopodiaceae, Amaranthaceae, Nyctaginaceae, Theligonaceae, Phytolaccaceae, Aizoaceae, Portulacaceae, Magnoliaceae, Trochodendraceae, Cercidiphyllaceae, Nymphaceae, Ceratophyllaceae, Ranunculaceae, Lardizabalaceae, Berberidaceae, Menispermaceae, Calycanthaceae, Lauraceae plant, Papaveraceae plant, Capparidaceae, Brassicaceae, Droseraceae, Nepenthaceae, Crassulaceae, Saxifragaceae, Pittosporaceae, Hamamelidaceae, Platanaceae, Rosaceae, Leguminosae, Oxalidaceae, Geraniaceae, Linaceae, Zygophyllaceae, Rutaceae, aroubaceae, Meliaceae, Polygalaceae, Euphorbiaceae, Callitrichaceae.

Further, Buxaceae, Empetraceae, Coriariaceae, Anacardiaceae, Aquifoliaceae, Celastraceae, Staphyleaceae, Icacinaceae, Aceraceae, Hippocastanaceae, Sapindaceae, Sabiaceae, Balsaminaceae, Rhamnaceae, Vitaceae, Elaeocarpaceae, Tilliaceae, Malvaceae, Sterculiaceae, Actinidiaceae, Theaceae, Hypericaceae, Elatinaceae, Tamaricaceae, Violaceae, Flacourtiaceae, Stachyuraceae, Passifloraceae, Begoniaceae, Cactaceae, Thymelaeaceae, Elaegnaceae, Lythraceae, Punicaceae, Rhizophoraceae, Alangiaceae, Melastomataceae, Trapaceae, Onagraceae, Haloragaceae, Hippuridaceae, Araliaceae, Apiaceae, Cornaceae, Diapensiaceae, Clethraceae, etc. may be mentioned.

Further, Pyrolaceae, Ericaceae, Myrsinaceae, Primulaceae, Plumbaginaceae, Ebenaceae, Symplocaceae, Styracaceae, Oleaceae, Buddlejaceae, Gentianaceae, Apocynaceae, Asclepiadaceae, Polemoniaceae, Boraginaceae, Verbenaceae, Laminaceae, Solanaceae (eggplants, tomatoes, etc.), Scrophulariaceae, Bignoniaceae, Pedaliaceae, Orobanchaceae, Gesneriaceae, Lentibulariaceae, Acanthaceae, Myoporaceae, Phrymaceae, Plantaginaceae, Rubiaceae, Caprifoliaceae plant, Adoxaceae, Valerianaceae, Dipsacaceae, Cucurbitaceae, Campanulaceae, Asteraceae, etc. may be mentioned.

In the same way, as monocots, for example, Spirodela (Spirodela plyrhiza) and Lemna (duckweed, Lemna trisulca) included in the Lemnaceae, Cattleya, Cymbidium, Dendrobium, Phalaenopsis, Vanda, Paphiopedilum, and Oncidium included in the Orchidaceae, Typhaceae, Sparganiaceae, Potamogetonaceae, Najadaceae, Scheuchzeriaceae, Alismataceae, Hydrocharitaceae, Triuridaceae, Poaceae (rice, barley, wheat, rye, corn, etc.), Cyperaceae, Arecaceae, Araceae, Eriocaulaceae, Commelinaceae, Pontederiaceae, Juncaceae, Stemonaceae, Liliaceae (asparagus etc.), Amaryllidaceae plant, Dioscoreaceae, Iridaceae, Musaceae, Zingiberaceae, Cannaceae, Burmanniaceae etc. may be mentioned.

### EXAMPLES

Examples of the production of the compounds used in the plant root inducing agent of the present invention and Examples of tests on the root inducing performances of these compounds will now be specifically described as examples, but the present invention is not limited to these Examples and is restricted only by the description in the claims needless to say.

### Example 1

### Production Example: Production of Specific Ketol Fatty Acid (Ia)

One type of plant root inducing agent of the present invention, the specific ketol fatty acid (Ia) (9-hydroxy-10-oxo-12(Z),15(Z)-octadecadienoic acid) was produced as follows by the enzyme method.

### 1. Preparation of Rice Germ-Derived Lipoxygenase

350 g of rice germ was washed and degreased by petroleum ether and dried (250 g). The resultant product was suspended in 1.25 liter of a 0.1M acetate buffer (pH4.5). This suspension was then homogenized. Thereafter, the homogenized extract was centrifugally separated at 16,000 rpm for 15 minutes to obtain the supernatent (0.8 liter).

Next, 140.8 g of ammonium sulfate (30% saturation) was added to the supernatent obtained. The mixture was allowed to stand at 4°C overnight, then was again centrifuged at 9500 rpm for 30 minutes. 232 g of ammonium sulfate (70% saturation) was added to the supernatent obtained (0.85 liter), the mixture was then allowed to stand at 4°C for 5 hours. Thereafter, this was centrifuged at 9,500 rpm for 30 minutes, the precipitate obtained (30 to 70% saturated fraction of ammonium sulfate of rice germ extract) was then dissolved in 300 ml of pH4.5 acetate buffer and heat treated at 63°C for 5 minutes. Further, the precipitate produced was removed and the supernatent obtained was desalted by dialysis (3Lx3) using an RC dialysis tube (made by Spectrum, Por 4: MWCO 12000 to 14000) to obtain a crude enzyme solution of the desired rice germ-derived lipoxygenase.

### 2. Preparation of Flax Seed-Derived Allenoxide Synthase

Flax seeds were purchased from Ichimaru Pharcos, 250 ml of acetone was added to 200 g of the flax seeds, and the mixture was homogenized (20sx3). The precipitate obtained was obtained by filtration by a sieve funnel, the solvent was then removed. Next, the precipitate was suspended again in 250 ml of acetone and the mixture homogenized (10s x 3) to obtain the precipitate again. This precipitate was washed with acetone and ethyl ester, then dried to obtain an acetone powder of flax seeds (150 g).

20 g of the acetone powder of flax seeds was suspended under ice cooling in 400 ml of a 50 mM phosphate buffer (pH7.0). The suspension was stirred at 4°C for 1 hour by a stirrer for extraction. The extract obtained was centrifuged at 11000 rpm for 30 minutes. 105.3 g of ammonium sulfate (0 to 45% saturated) was added to the supernatent (380 ml) thus obtained. The mixture was allowed to stand under ice cooling for 1 hour and further centrifuged at 11000 rpm for 30 minutes. The precipitate obtained was dissolved in 150 ml of a 50 mM phosphate buffer (pH7.0) and the resultant product was dialyzed to remove the salt (3Lx3) to obtain a crude enzyme solution of the desired flax seed-derived allenoxide synthase.

### 3. Preparation of Sodium Salt of α-Linolenic Acid

The starting material α-linolenic acid has an extremely low solubility in water, so to facilitate action as an enzyme substrate, the α-linolenic acid was converted to a sodium salt. That is, 530 mg of sodium carbonate was dissolved in 10 ml of purified water and warmed to 55°C, 278 mg of α-linolenic acid (made by Nacalai Tesque) was dropwise added thereto and the mixture was stirred for 3 hours. After the end of the reaction, an ion exchange resin (Dowex 50W-X8 (H⁺form) (made by Dow Chemical)) was used for neutralization, whereby a precipitate was produced. The resultant product was filtered to separate the resin which was then dissolved by MeOH, the solvent was then distilled off under reduced pressure. The product obtained was recrystallized with isopropanol to obtain a desired sodium salt of α-linolenic acid (250 mg,83%).

### 4. Preparation of Specific Ketol Fatty Acid (Ia)

The sodium salt of the α-linolenic acid obtained at the above 3 (15 mg:50 µmol) was dissolved in 30 ml of a 0.1M phosphate buffer (pH7.0). 3.18 ml of the crude enzyme solution of the rice germ-derived lipoxygenase obtained under an oxygen flow at 25°C by the above section 1 was added to the solution obtained and stirred for 30 minutes, then a further 3.18 ml of the same crude enzyme solution of the rice germ-derived lipoxygenase was added and stirred for 30 minutes.

After the stirring, 34.5 ml of a crude enzyme solution of the allenoxide synthase obtained at the above section 2 was added to this lipoxygenase reaction product under a nitrogen flow. The mixture was stirred for 30 minutes, then dilute hydrochloric acid was added under ice cooling to adjust the reaction solution to pH3.0.

Next, this reaction solution was extracted with CHCl₃-MeOH=10:1. Magnesium sulfate was added to the organic layer obtained by extraction for dehydration, then the solvent was distilled off under reduced pressure for drying.

The crude product thus obtained was subjected to HPLC to obtain a fraction of a peak deemed as the specific ketol fatty acid (Ia) (retention time: around 16 minutes). Chloroform was added to the fraction obtained, the chloroform layer was separated and rinsed with water, and an evaporator was used to distill off this chloroform to obtain the purified product.

To confirm the structure of the purified product obtained, the ¹H and ¹³C-NMR spectra were measured by a dimethanol solution. The measured spectra were shown in Table I.

**Table I**

| | | |
|---|---|---|
| 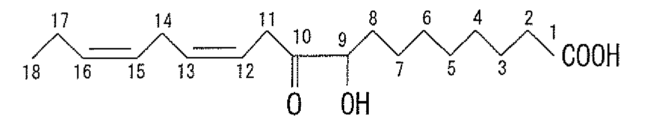 | | |

| | Standard product | Product synthesized by enzyme method |
|---|---|---|
| C-1 | 178.5 | 178.4 |
| C-2 | 35.7 | 35.4 |
| C-3 | 26.8 | 26.9 |
| C-4 | 31.1 | 31.1 |
| C-5 | 31.0 | 31.0 |
| C-6 | 31.1 | 31.1 |
| C-7 | 26.9 | 26.9 |
| C-8 | 35.4 | 35.4 |
| C-9 | 78.6 | 78.6 |
| C-10 | 213.8 | 213.8 |
| C-11 | 38.4 | 38.4 |
| C-12 | 123.0 | 123.0 |
| C-13 | 133.5 | 133.4 |
| C-14 | 27.5 | 27.5 |
| C-15 | 128.4 | 128.4 |
| C-16 | 134.6 | 134.0 |
| C-17 | 22.3 | 22.3 |
| C-18 | 15.4 | 15.4 |

As a result, in ¹H-NMR, signals based on the terminal methyl group (δ0.98(t)), two sets of olefin ((δ5.25,5.40), (δ5.55,5.62)), the secondary hydroxy group (δ4.09(dd)), and a large number of methylene were observed. The product was deduced to be the specific ketol fatty acid (Ia). Further, the measured chemical shift value of the ¹³C-NMR of Table I was compared with the chemical shift value of ¹³C-NMR of the specific ketol fatty acid (Ia) (chemical shift value of ¹³C-NMR in "Production Example (Extraction Method)" described in Japanese Patent Publication (A) No. 10-324602, in particular, page 7, column 11, line 1 from the bottom on (page 8, left column, line 3 on, paragraph no. (0054) and paragraph no. (0055)) and found to match.

Therefore, it could be confirmed that the synthesized product obtained by the enzyme method in the above way was the specific ketol fatty acid (Ia) 9-hydroxy-10-oxo-12(Z), 15(Z)-octadecadienoic acid.

### Evaluation Test 1: Evaluation of Root Inducing Performance of Specific Ketol Fatty Acid (Ia)

The second node parts of Hydrangea (variety name unknown) were cut out in August and placed on laboratory dishes, on which filter paper was laid.

Aqueous solutions of the specific ketol fatty acid (Ia) (concentrations 100 µM and 200 µM) were prepared and sprayed by sprayers on said cut Hydrangea, which were then allowed to stand covered for 2 hours. Note that the control group was sprayed with pure water and allowed to stand in the same way as the specific ketol fatty acid (Ia). Thereafter, water was added and the resultant product allowed to stand at 25°C under continuous light for 20 days.

The average number of roots grown were counted for five specimens in each group, whereby the average for the water treatment group was 1.1, the specific ketol fatty acid (Ia) 100 µM group was 3.2, and the 200 µM group 3.1.

### Evaluation Test 2: Evaluation of Root Inducing Performance of Specific Ketol Fatty Acid (Ia)

Branches of Hydrangea (variety name unknown) including dormant buds were cut to 5 cm or so lengths in December and were transplanted into trays filled with soil composed of red gravel and vermiculite (7:3). Water or a specific ketol fatty acid (Ia) (10 µM, 100 µM) was sprayed, the specimens were then cultured in a 25°C biochamber (12 hour bright/dark cycle) for one month. The weights in the state with the soil attached, when pulling the cuttings from the soil and the number of roots grown were measured. The measurement results are shown in the following Table II. Note that an increase in the weight with the soil attached accompanies improvement of the soil holding rate accompanying development of fibrous roots and the proliferation of leaf buds. This reflects the superior root inducing effect and performance.

**Table II**

| | Weight with soil attached (g/specimen) | No. of roots grown/ specimen |
|---|---|---|
| Water treatment | 1.5 | 2.1 |
| Specific ketol fatty acid (I) (10 µM) | 6.8 | 5.3 |
| Specific ketol fatty acid (I) (100 µM) | 4.4 | 6.5 |

The measurement results reflect the fact that the specific ketol fatty acid (Ia) in particular promotes development of leaf buds.

As explained above, that fact that said ketol fatty acid exhibits a plant root inducing action is completely unexpected.

### Example 2

In this Example 2, the specific ketol fatty acid (Ia) of the active ingredient compound of the root inducing agent of the present invention, that is, 9-hydroxy-10-oxo-12(Z),15(Z)-octadecadienoic acid, was used and tested for root inducing performance of Prunus x yedoensis (cherry tree). The results of observation are shown, but the present invention is not limited to this example in any way. It is only restricted by the description of the claim needless to say. The evaluation test methods and test results are as follows:

### Root Inducing Performance Test for Prunus x yedoensis

15 test groups including the root inducing agent of the present invention alone and combinations of the agent with other existing root inducing agents were used for a test of the root inducing performance for Prunus x yedoensis.

The existing root inducing agents used for the test were the indole inducing agent shown by the following formula (V) (hereinafter abbreviated as the "IBL". See Japanese Patent Publication No. 10-77268A) and the commercially available root inducing agent Oxiberon (hereinafter abbreviated as "Oxy", Made by Bayer CropScience).

Note that in this test, said specific ketol fatty acid (Ia) is abbreviated as "KODA".

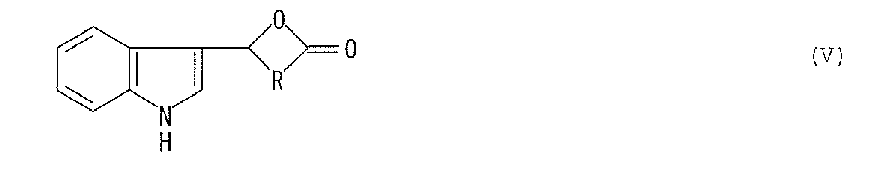

### (wherein R is ethylene.)

### Root Inducing Agent Compositions

The compositions of the root inducing agents used in the different test groups were as follows:

Test Group (1): water, Test Group (2): KODA 10 µM, Test Group (3): KODA 100 µM, Test Group (4): Oxy, Test Group (5) : IBL 50 ppm, Test Group (6): IBL 100 ppm, Test Group (7): KODA 10 µM + Oxy, Test Group (8): KODA 100 µM + Oxy, Test Group (9): KODA 10 µM + IBL 50 ppm, Test Group (10): KODA 100 µM + IBL 50 ppm, Test Group (11): KODA 10 µM + IBL 100 ppm, Test Group (12): KODA 100 µM + IBL 100 ppm, Test Group (13): KODA 10 µM + IBL 50 ppm + Oxy, Test Group (14): KODA 100 µM + IBL 50 ppm + Oxy, Test Group (15): KODA 100 µM + IBL 100 ppm + Oxy.

### Root Inducing Test Procedure

Branches of Prunus x yedoensis used for the test were purchased from Sumitomo Forestry Landscaping Co., Ltd. These were cut to lengths of 5 to 8 cm or so from the tips and transplanted into mixed soil in trays composed of red gravel and vermiculite blended in a 7:3 ratio. At this time, 10 branches were used for each test group. Note that these tests were started in early March, so the leaves had still not spread.

The Oxiberon (Oxy) used for the root inducing test was composed of the Oxiberon liquid (containing 0.4% of indolebutyric acid, made by Bayer CropScience) diluted 40-fold. Branches of Prunus x yedoensis for Test Groups (4), (7), (8), (13), (14) and (15) using Oxy were immersed in this for 3 hours, then were transplanted into the soils of the test groups.

The results of measurement of the number of cuttings surviving seven weeks after the start of the test were as follows:
Test Group (1): 0%, Test Group (2): 10%, Test Group (3): 10%, Test Group (4): 0%, Test Group (5): 0%, Test Group (6): 0%, Test Group (7): 30%, Test Group (8): 10%. Test Group (9): 20%, Test Group (10): 30%, Test Group (11) : 20%, Test Group (12): 30%, Test Group (13): 10%, Test Group (14): 20%, Test Group (15): 30%.
Note that the surviving cuttings all exhibited active root induction.

As explained above, the root inducing agent of the present invention has a superior root inducing performance with respect to Prunus x yedoensis for which transplanting by cuttings had been considered impossible.

### Example 3

In this Example 3, in the same way as in Example 2, the specific ketol fatty acid (Ia) was used to test the root inducing performance for Hypericum chinense.

The compositions of the root inducing agents and the root inducing test procedure used in the test groups were the same as in Example 2. As a result of the tests, it was learned that there was 100% survival of the cuttings of Hypericum chinense in the case of use of the root inducing agent (10 µM) and IBL (50 ppm).

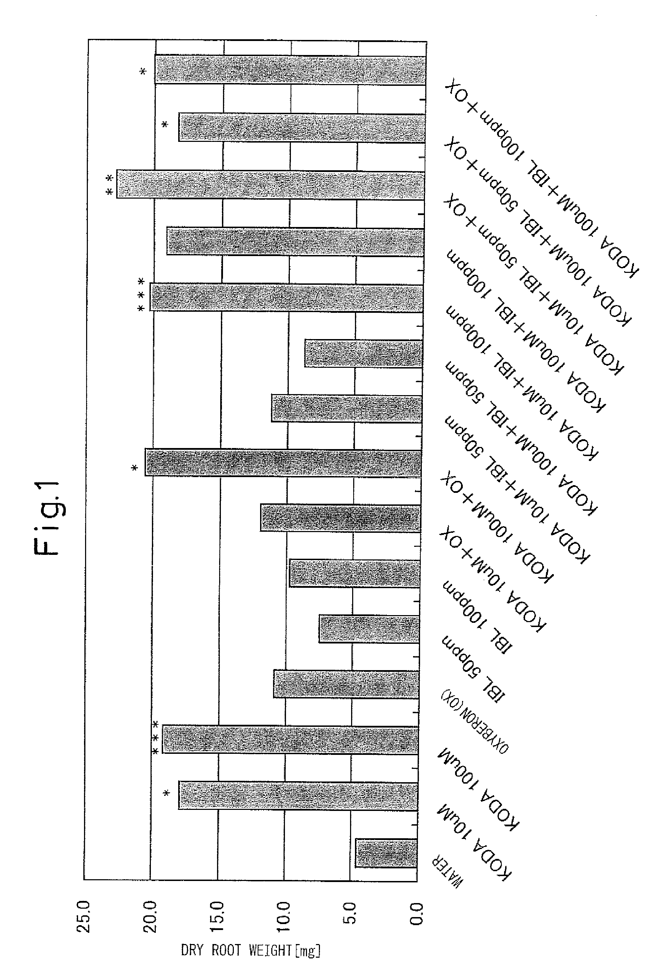

Further, the root inducing performance test was as shown in FIG. 1. According to this, FIG. 1, in the Test Group (2), Test Group (3), Test Group (8), Test Group (11), Test Group (13), Test Group (14) and Test Group (15), the amount of root inducing clearly increased compared with the water-treated group (Test Group (1)).

From the above results, use of root inducing agent of the present invention is a condition required and sufficient for increase of roots.

Note that the asterisks at the tops of the bar graphs of FIG. 1 indicate the rate of risk in measurement of the significant difference. One indicates a rate of risk of 5% or less, two a rate of risk of 1% or less, and three a rate of risk of 0.5% or less.

That is, in the test groups with asterisks at the tops of the bar graphs, it was shown that, compared with the water treatment group (Test Group (1)), the amount of root growth clearly increased.

### Example 4

### Root Inducing Performance Test for Paraserianthes falcataria Becker

Paraserianthes falcataria Becker useful as a material for producing plywood is a tropical plant, but like other trees, cannot be transplanted by cutting as the trees age. The inventors tried transplanting Paraserianthes falcataria Becker, considered impossible to transplant by cuttings, using KODA and the existing root inducing agent Oxiberon (made by Bayer CropScience). For the cultivation soil, they used red gravel granules. The results after two months were as shown in Table III. No root generation was induced for Paraserianthes falcataria Becker even by Oxiberon, but by spraying 10 µM KODA, a 44% root inducing rate was obtained.

**Table III**

| KODA (µm) | Oxiberon | Root Inducing rate | Maximum root length (mm) | Root dried weight (mg) |
|---|---|---|---|---|
| 10 | 0 | 44% | 27.3 | 1.8 |
| 100 | 0 | 11% | 5.3 | 2.9 |
| 0 | 2X solution | 0% | 0 | 0 |

### INDUSTRIAL APPLICABILITY

As explained above, the fact that the ketol fatty acid of the present invention exhibits a plant root inducing action was completely unexpected.

## Claims

1. An inducing agent for plant root comprising a ketol unsaturated fatty acid having 5 to 24 carbon atoms, 1 to 6 double bonds between carbon atoms and an α ketol structure or γ ketol structure.

2. An inducing agent for plant root as claimed in claim 1, wherein said ketol unsaturated fatty acid is 9-hydroxy-10-oxo-12 (Z), 15 (Z)-octadecadienoic acid.
